# EUROPEAN PATENT SPECIFICATION

(11) **EP 3 166 785 B1**
(45) Date of publication and mention of the grant of the patent: **30.12.2020**
(21) Application number: 15734706.3
(22) Date of filing: 10.07.2015
(51) Int. Cl.: B32B 5/24, B32B 27/32, B32B 27/40, A41D 31/02

(54) **METHOD FOR WATERPROOFING BLANKS OF SHOES, GLOVES, ITEMS OF CLOTHING AND OTHER CLOTHING ACCESSORIES, BLANKS WATERPROOFED WITH THE METHOD, SHOES, GLOVES, ITEMS OF CLOTHING AND OTHER CLOTHING ACCESSORIES PROVIDED WITH THE WATERPROOFED BLANKS**
VERFAHREN ZUR ABDICHTUNG GEGEN WASSER VON ZUSCHNITTEN VON SCHUHEN, HANDSCHUHEN, BEKLEIDUNGSARTIKELN UND ANDEREN BEKLEIDUNGSTEILEN, MIT DEM VERFAHREN GEGEN WASSER ABGEDICHTETE ZUSCHNITTE, MIT DEN GEGEN WASSER ABGEDICHTETEN ZUSCHNITTEN AUSGESTATTETE SCHUHE, HANDSCHUHE, BEKLEIDUNGSARTIKEL UND ANDERE BEKLEIDUNGSTEILE
PROCÉDÉ D'IMPERMÉABILISATION À L'EAU D'ÉBAUCHES DE CHAUSSURES, DE GANTS, DE VÊTEMENTS ET D'AUTRES ACCESSOIRES VESTIMENTAIRES, ÉBAUCHES IMPERMÉABILISÉES À L'EAU À L'AIDE DU PROCÉDÉ, CHAUSSURES, GANTS, VÊTEMENTS ET AUTRES ACCESSOIRES VESTIMENTAIRES COMPRENANT LES ÉBAUCHES IMPERMÉABILISÉES À L'EAU

(30) Priority: 11.07.2014 IT PD20140185
(43) Date of publication of application: 17.05.2017
(73) Proprietor: Geox S.p.A., 31044 Montebelluna Località Biadene (Treviso) (IT)
(72) Inventor: POLEGATO MORETTI, Mario, I-31035 Crocetta del Montello (IT); TOFFOLETTO, Marta, I-31040 Volpago del Montello (IT); MATTIONI, Bruno, I-31044 Montebelluna (IT)
(74) Representative: Modiano, Micaela Nadia
(86) International application number: PCT/EP2015/065871
(87) International publication number: WO 2016/005578

(56) References cited:
- EP-A2- 0 288 214
- DATABASE WPI Week 201456 Thomson Scientific, London, GB; AN 2014-Q31313 XP002736520, & CN 103 862 729 A (HUZHOU SENNUO FLUORINE MATERIALS TECHNOL) 18 June 2014 (2014-06-18)

## Description

The present invention relates to a method for waterproofing blanks of shoes, gloves, items of clothing and other clothing accessories, to blanks waterproofed with said method, and to shoes, gloves, items of clothing and other clothing accessories provided with said waterproofed blanks.

The need to manufacture shoes, clothing products and accessories with waterproof and breathable characteristics has now been felt for some time.

In the field of shoes, it is in fact known that comfort is tied not only to correct anatomical fit but also to the ability to dissipate externally the water vapor that forms due to perspiration, and the same applies to items of clothing, this being achieved by ensuring correct exchange of heat and water vapor between the internal microclimate and the external one. However, water vapor permeation must not compromise the waterproofness of the shoe or of the item of clothing.

Traditionally, breathable products are those that use natural materials such as leather or equivalent products, which however, in the presence of rain or bad weather, indeed due to their breathable properties, do not ensure good waterproofness and absorb water rather easily.

For this reason, in the field of shoes but not only, waterproof and breathable membranes have been used now for some years which are to be coupled internally to the upper, made of leather or similar material or fabric, so as to provide an upper assembly.

The expression "waterproof and breathable" generally is understood to reference the characteristic of a material of being impermeable to water in the liquid state combined with permeability to water vapor.

Impermeability to water in the liquid state is understood as the absence of crossing points, when a material is subjected to a hydrostatic pressure of at least 0.5 bars, maintained for at least 30 seconds.

In particular, impermeability is assessed as the resistance of the specimen to the penetration of water under pressure according to the method described in standard EN1734.

According to this method, a specimen of material is fixed so as to close a vessel provided with an inlet of water under pressure. The vessel is filled with water so as to subject the face of the specimen of material that is directed toward the vessel to a hydrostatic pressure of 0.5 bars. This condition is maintained for 30 seconds.

The specimen is locked between the mouth of the vessel and a retention ring, both covered with sealing gaskets made of silicone rubber.

Pressurization is obtained by forcing into the vessel water that arrives from a tank by means of compressed air. Such air is regulated by a pressure reduction unit with a pressure gauge on which the attained pressure is shown.

The face of the specimen that is external to the vessel is then observed.

The absence of crossing points, which consist in forming on the surface droplets with a diameter comprised between 1 mm and 1.5 mm, indicates the impermeability of the specimen.

If it is necessary to avoid specimen deformation, a grid is fixed thereon which has a square mesh with a side of no more than 30 mm, is made of synthetic material and is provided by means of filament having a diameter comprised between 1 mm and 1.2 mm.

Permeability to water vapor is understood as the quantity of water vapor that passes through a material due to a partial pressure gradient.

ISO standard 20344-2004, in chapter 6.6 "Determination of water vapour permeability", related to safety shoes, describes a testing method that consists in fixing a specimen of the material being tested so as to close the opening of a bottle that contains a certain quantity of solid desiccant, i.e., silica gel.

The bottle is subjected to a strong current of air in a conditioned atmosphere.

The bottle is made to rotate so as to stir the solid desiccant and eliminate any partial pressure gradient of vapor inside the bottle.

The bottle, with all of its content, is weighed before and after the testing period in order to determine the mass of humidity that has passed through the material and has been absorbed by the solid desiccant.

Permeability to water vapor, expressed in milligrams per square centimeter per hour (mg/cm²/h), is then calculated on the basis of the mass of humidity that is measured, of the area of the opening of the bottle, and of the testing time.

In order to allow easy dissipation of the sweat that tends to accumulate in the region of the sole, shoes are currently known which have different types of rubber sole that are impermeable to water in the liquid state and permeable to water vapor and are obtained by using a breathable and waterproof membrane that is sealed to the body of the sole so as to cover through openings thereof.

Shoes are also known which have an upper provided by means of material made of leather or the like or fabric and with which a lining is associated on the inner side, said lining being closed like a sock and being provided with a waterproof and breathable membrane that is sewn or glued to the insole to ensure vapor permeation and waterproofness around the entire foot. The stitched seams that interrupt the continuity of the lining with membrane are rendered waterproof by means of sealing adhesives or sealing tapes.

The provision of these shoes is not devoid of aspects that can be improved, since when the water passes through the upper, which is not impermeable to rain, water pockets are formed in the interspace comprised between the upper and the lining.

In order to solve this drawback, shoes have also been devised which have an upper provided by means of a material made of leather or the like or of fabric, with which a waterproof and breathable membrane is associated directly on the inner side. The stitched seams that interrupt the continuity of the membrane are conveniently rendered waterproof by means of sealing adhesives or sealing tapes.

However, since the upper used also for this last solution is not impermeable to rain, if the membrane does not follow perfectly the folds and the contour of the upper, small pockets are created in which the water that passes through the upper can stagnate, in a manner similar to the preceding case.

According to the teaching disclosed in EP1139805, one solution would consist in gluing, by means of spots of glue, an elastic membrane with a degree of elongation of more than 50% (preferably 100%) directly to the inner side of the hide of the upper.

However, this solution poses restrictive constraints in the choice of the membranes that also have such characteristics as to render a shoe waterproof and breathable.

These and other solutions have been devised by using membranes for example of the type disclosed in some patents by of W. L. Gore. These membranes are made of thin films of expanded polytetrafluoroethylene (e-PTFE), with thicknesses that vary usually from 15 to 70 microns and are waterproof and breathable.

Indeed due to their low thickness, these membranes have poor mechanical strength characteristics.

In the case of shoes, the problem of poor mechanical strength becomes manifest in the difficulty of said membrane to follow the flexing motions of the upper while walking.

In the case of items of clothing and accessories, also, the same problem is felt in the presence of the bending cycles of the blanks made of leather, fabric and the like, which commonly occur during the use or production of the items.

Another type of membrane is made of hydrophilic polyurethane, with greater elasticity characteristics than the e-PTFE membrane but lower breathability.

In some cases, in order to give elasticity to the structure of the e-PTFE membrane without compromising its breathability, said structure is combined with a thin layer of polyurethane of the hydrophilic type, with waterproof and breathable characteristics, producing a two-part waterproof and breathable membrane.

The layer made of hydrophilic polyurethane indeed gives greater elasticity to the membrane, which however must follow the flexing of the blank despite the gluing spots that couple it thereto.

In the case of a shoe, the flexing of the sole, which occurs mainly in the step of resting and rotation of the forefoot during the stepping cycle, entails a flexural deformation of the waterproofed blank of which the upper is made.

This deformation necessarily entails an extension of the membrane that is associated by gluing inside the material of the upper.

In order to follow perfectly the internal contour of the material of the upper, the membrane must be able to elongate more than the material of the upper so as to not rupture, since tension in the membrane that leads it to break is created between one spot of glue and the next.

On the contrary, this does not occur in the presence of a lining for an upper provided with a waterproof and breathable membrane, since in this case the membrane is glued not to the material of the upper but to the internal material of the lining. Therefore, it is the internal material of the lining that withstands the greatest tension, which is therefore removed from the membrane, preserving it against rupture.

Furthermore, during release of the forefoot from the ground and during heel contact, the waterproofed blank, of which the upper is composed, returns to the release position and is ready for a new flexural deformation.

In order to follow perfectly the internal contour of the upper, the membrane must be able to return rapidly and perfectly to its original dimensions before the new flexural deformation.

In this manner, the penetration of water between the membrane and the material of the upper after each deformation cycle is avoided.

If the membrane, once it has been elongated, does not return to its original dimensions during release, spaces are formed between the material and the membrane in which water can penetrate.

EP0288214 discloses a procedure aimed at obtaining an article already in the from of a finished product, which can be integrated directly into other products such as cloting and the like, without the need for further processing.

DATABASE WPI, Weel 201456 - Thomson Scientific, London, GB; AN 2014-Q31313 & CN 103 862 729 A (HUZHOU SENNUO FLUORINE MATERIALS TECHNOL) 18 June 2014 (2014-06-18) discloses a multifunctional ultra-light and ultra-thin shell fabric and is a document that defines the general state of the art.

The aim of the present invention is to devise a method for waterproofing a blank of shoes, gloves, items of clothing and other clothing accessories, ensuring its breathability.

Within this aim, an object of the invention is to improve the wear resistance of the membrane applied to the blank, especially while walking in the case of shoes.

Another object of the invention is to devise a method for waterproofing a blank, such as the upper in the case of shoes, by using a waterproof and breathable membrane that has lower elasticity characteristics than those required by the background art.

This aim, as well as these and other objects that will become better apparent hereinafter, are achieved by a method for waterproofing blanks of shoes, gloves, items of clothing and other clothing accessories, comprising the gluing and pressing on the surface of said blank, on the side intended to remain hidden after its application, of a waterproof and breathable assembly, characterized in that said assembly is provided by associating a waterproof and breathable functional element in the form of a flexible sheet with at least two meshes that close it in a sandwich-like manner, at least one of the meshes being interposed between said functional element and said blank.

The present invention also relates to a blank that is waterproofed by means of the method cited above, characterized in that it comprises said blank associated with a said assembly that comprises said waterproof and breathable functional element in the form of a flexible sheet and at least two of said meshes between which said functional element is closed in a sandwich-like manner, at least one of said meshes being interposed between said functional element and said blank.

The present invention also relates to a shoe and an item of clothing manufactured with the waterproofed blanks.

Further characteristics and advantages of the invention will become better apparent from the description of a preferred but not exclusive embodiment of the method and of the waterproofed blank according to the invention, illustrated by way of nonlimiting example in the accompanying drawings, wherein:
Figure 1 is an enlarged-scale view of a flap of blank that is waterproofed by means of the method according to the invention, with its superimposed parts shown in cross-section and in view;
Figure 2 is a view of the step of the method according to the invention during the coupling of the blank to the assembly.

With reference to the figures, the method according to the invention allows to obtain a waterproofed blank, generally designated by the reference numeral 10, of shoes, gloves, items of clothing and other clothing accessories. The element to be waterproofed consists of a blank 11 made of leather, fabric but also other similar materials in sheet form, which usually can be used as a replacement of leather and fabric for the above cited applications.

The method according to the invention is capable of waterproofing the blank 11 with a step of gluing and pressing on its surface, on the side intended to remain hidden after its application, of a waterproof and breathable assembly 12. The assembly 12 is applied to the blank 11 so as to cover its surface completely.

In particular, coupling occurs by preferably hot pressing the set constituted by the blank 11 and the assembly 12. This operation is performed by means of a flat press or a roller press or a calender.

The surface of the blank 11, or in an equivalent manner the surface of the assembly 12 that is coupled to the blank 11, is in fact conveniently provided with adhesive, in the manner described hereinafter.

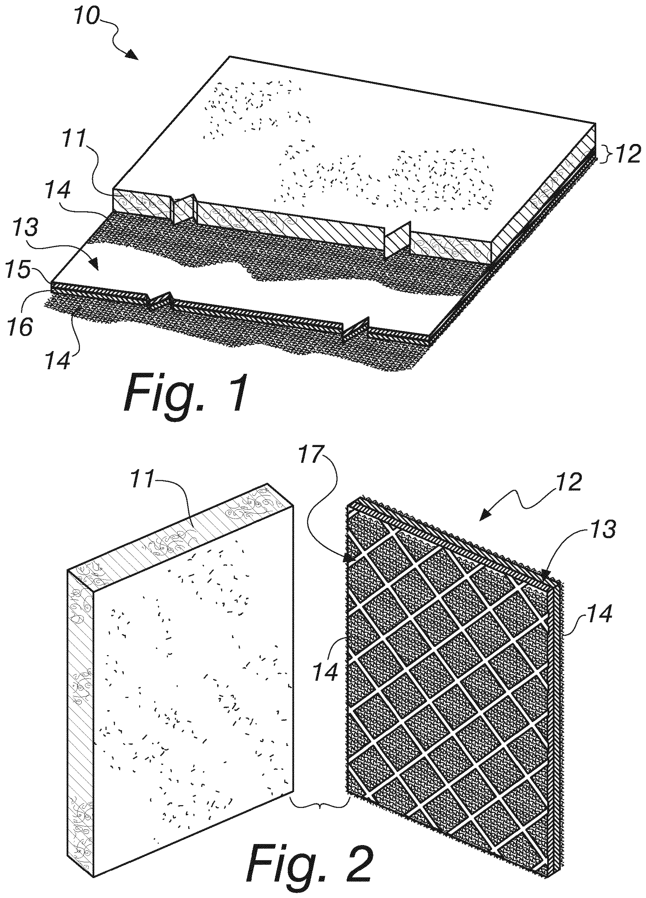

Figure 1 is an enlarged-scale view of the waterproofed blank 10 and all its components, including the ones that provide the assembly 12, are indicated.

Figure 2 shows a step of the method prior to the coupling of the blank 11 to the assembly 12.

As clearly visible, the assembly 12 is provided by association of a waterproof and breathable functional element 13 in the form of a flexible sheet with two meshes 14 that close it in a sandwich-like fashion.

One of the two meshes 14 is therefore interposed between the functional element 13 and the blank 11.

In particular, the association of the functional element 13 with the two meshes 14 is obtained by lamination.

More particularly, the meshes 14 are constituted substantially by an open mesh fabric which is very light and made of monofilament nylon, with a thickness comprised approximately in the 0.15÷0.30 mm interval and a weight preferably comprised in the 20÷40 g/m² interval. The monofilament structure and the nylon allow the mesh to not absorb and/or entrain water.

The functional element 13 is substantially a membrane made of polymeric material that is impermeable to water in the liquid state and permeable to water vapor.

For example, the functional element 13 can be made of polyurethane, with elasticity characteristics that allow the waterproofed blank 10 to follow the deformations to which the shoe, glove, item of clothing or other clothing accessory for which it is used is subjected, or can be made of expanded polytetrafluoroethylene.

As an alternative, the functional element 13 is advantageously provided by association of a first layer 15 made of expanded polytetrafluoroethylene (e-PTFE), with a second layer 16 made of hydrophilic polyurethane. In this manner a two-part laminate is obtained which has a monolithic structure.

The expression "monolithic" is understood here to reference the typical characteristic of complex structures made of parts that are joined and are not detachable except by breaking one of them.

In the coupling of the assembly 12 with the blank 11, the first layer 15 is the one of the two that faces the blank 11.

The two-part functional element 13 is therefore constituted by the two superimposed layers, the first layer 15 and the second layer 16, which correspond respectively to the layer made of e-PTFE and to the layer made of hydrophilic polyurethane, and is coupled at the first layer 15 with a mesh 14 that is interposed between it and the blank 11.

This assembly order is due to the characteristics of the two components.

Expanded PTFE is by definition a porous, highly hydrophobic and water-repellent material, which has an extremely low angle of contact with the water droplet. Passage of water vapor occurs by means of a convective and partial pressure differential model through the microporosity of the structure of the expanded PTFE.

This structure is constituted by a set of nodes and fibrils, generated by the stretching action that follows the extrusion of the PTFE.

The first layer 15 of the functional element 13 therefore advantageously constitutes a water-repellent barrier against the water that arrives from the side of the blank 11.

Vice versa, the hydrophilic polyurethane is a highly hygroscopic material that has a greater angle of contact and affinity with the water droplet.

The passage of water vapor occurs according to a diffusion model through the extremely low thickness of the polyurethane layer. The water molecules are adsorbed by the hygroscopic material, conveyed along the structure of the material and de-adsorbed on the opposite side due to the partial vapor pressure differential.

The second layer 16 of the functional element 13, which is directed opposite with respect to the blank 11, therefore facilitates advantageously the evaporation of sweat or moisture that arrives from the side that is opposite to the side of the blank 11.

The first layer 15 made of expanded PTFE gives a high level of water repellency and breathability to the functional element 13, the second layer 16 of hydrophilic polyurethane gives strength and elasticity.

These characteristics of the hydrophilic polyurethane layer are advantageous, since expanded PTFE membranes can be elongated but are substantially non-elastic.

The provision of the functional element 13 in the version as a two-part laminate can occur by spreading a hydrophilic polyurethane in the fluid state, directly and continuously, on a film of hydrophobic e-PTFE. Then the hydrophilic polyurethane solidifies on the porous structure of the e-PTFE film.

As an alternative, the functional element 13 can be constituted equally advantageously by a lamination that has a sheet-like, monolithic, stratified and cohesive structure comprising a plurality of functional layers made of polymeric material, preferably e-PTFE, which is impermeable to water in the liquid state and permeable to water vapor.

The expression "sheet-like" is understood to reference the shape characteristic of a structure that has one dimension that is reduced considerably with respect to the other two, said dimension being its thickness, which in any case, according to what is commonly understood to differentiate a plate from a lamina or a membrane, remains significant.

However, it should not be understood that this shape characteristic in itself compromises the bendability or flexibility of the lamination.

The second figure shows the method in an instant that precedes the adhesive bonding of the assembly 12 to the blank 11. The figure shows that the assembly 12 is glued to the blank 11 by applying a matrix of glue 17 produced by the intersection of lines of adhesive, preferably a polyurethane adhesive.

In the example given, the glue matrix 17 is spread on the surface of the mesh 14 that faces the blank 11, but it can be applied in an equivalent manner to the surface of the blank 11, the one at the face that is intended to remain hidden during its use.

As an alternative it is possible to apply breathable hydrophilic polyurethane adhesive that is distributed continuously on the entire surface of the blank 11 or on the mesh 14.

The blank 10 waterproofed by means of the method according to the invention therefore comprises a blank 11 with which an assembly 12 is coupled which comprises a waterproof and breathable functional element 13, such as a membrane with these characteristics, and two meshes 14 between which the functional element 13 is closed in a sandwich-like fashion.

The waterproofed blank 10 according to the invention thus provided and structured has a water penetration resistance at least equal to 15,000 bending cycles, determined according to the method presented in the ASTM D 2009-05 standard.

Said ASTM D 2009-05 standard describes a testing method that simulates the flexing of the upper of a shoe during real use.

A specimen of the waterproofed blank 10 measuring 101.6±3.2 x 101.6±3.2 mm is fastened between two V-shaped clamps which are parallel and spaced by 635±2.5 mm, with the blank 11 downward and the assembly 12 upward. Approximately 400 clean and degreased steel balls which have an intrinsic maximum electrical resistance of 7500 Q are inserted in the pocket created by the specimen thus assembled, on the side of the assembly 12. One clamp is fixed while the other one performs an eccentric motion at the rate of 90±5 RPM.

In one rotation, the tip of the movable clamp moves by 25.4±1.3 mm below the horizontal. The specimen moves within a solution of NaCl at a concentration of 1 g/L, so that the level of the liquid is 19.1±1.3 mm above the lowest point of the specimen that is adjacent to the fixed clamp, in contact with the solution on the side of the blank 11.

In order to determine the number of bending cycles linked to resistance to water penetration, the electrical resistance between the tank that contains the saline solution in continuous contact with the specimen and the steel balls is recorded.

After 15,000 bending cycles, the waterproofed blank 10 according to invention is found to be still waterproof.

By means of the described method it is possible to waterproof blanks to be used in the provision of shoes, where the blank 11 constitutes their upper, and of items of clothing, for example jackets.

The blank 10 waterproofed by means of the described method can be used advantageously also in the production of gloves and other clothing accessories, for example bags and wallets.

It should be noted that the mesh 14, by being interposed between the functional element 13 and the blank 11, improves the grip of the adhesive to the assembly 12 and to the blank 11.

Furthermore, advantageously the mesh 14 constitutes a reinforcement structure for the functional element 13. The tension produced by the flexing of the blank 11 is discharged on the mesh 14, which constitutes a sort of frame for the functional element 13.

In a similar manner, the matrix of glue 17, produced by the intersection of lines of glue, constitutes a reinforcement structure for the assembly 12. The tension produced by the flexing of the blank 11 is discharged uniformly along the lines of the matrix of glue 17, which constitutes a sort of frame for the assembly 12, avoiding the isolated tension peaks that are characteristic of gluing performed by isolated spots.

The functional element 13 is capable of returning rapidly and perfectly to its original dimensions as a consequence of flexural deformation such as that produced by walking for the case of a shoe.

Therefore, the waterproofed blank 10 according to the invention is not only waterproof and breathable but also has wear resistance characteristics thanks to the matrix of glue 17 and to the presence of the second layer 16 made of hydrophilic polyurethane.

Furthermore, the excellent coupling of the assembly 12 to the blank 11, which is due not only to pressing but also to the presence of the mesh 14 and to the use of a matrix of glue 17, prevents the formation of water pockets between the blank 11 and the assembly 12, while not preventing the vapor permeation of the waterproofed blank 10, without the choice of the functional element 13, i.e., the membrane indicated in the background art, having to be limited by its inherent elasticity characteristic.

In practice it has been found that the invention achieves the intended aim and objects, by providing a method for waterproofing blanks, particularly of shoes, gloves, items of clothing and other clothing accessories, ensuring the breathability of the product and at the same time preventing the formation of water pockets by way of the presence of the two meshes that close the functional element in a sandwich-like manner and by way of the optimum grip of the assembly to the blank.

Furthermore, it has been found that wear resistance is such as to ensure the waterproofness of the blank after a large number of bending cycles without imposing restrictive constraints in the choice of the functional element.

In practice, the materials used, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for waterproofing blanks (11) of shoes, gloves, items of clothing and other clothing accessories, comprising the gluing and pressing on the surface of said blank (11), on the side intended to remain hidden after its application, of a waterproof and breathable assembly (12), **characterized in that** said assembly (12) is provided by associating a waterproof and breathable functional element (13) in the form of a flexible sheet with at least two meshes (14) that close it in a sandwich-like manner, at least one of said meshes (14) being interposed between said functional element (13) and said blank (11).

2. The method according to claim 1, **characterized in that** said functional element (13) is made of a polymeric material that is impermeable to water in the liquid state and permeable to water vapor.

3. The method according to claim 2, **characterized in that** it comprises a step of providing said functional element (13) by associating a first layer (15) made of expanded polytetrafluoroethylene with a second layer (16) made of hydrophilic polyurethane, the former facing said blank (11) in the coupling of said assembly (12) with said blank (11), with the interposition of at least one of said meshes (14).

4. The method according to claim 1, **characterized in that** said association of said functional element (13) with said at least two meshes (14) is obtained by lamination.

5. The method according to claim 1, **characterized in that** said assembly (12) is glued to said blank (11) by means of the application of a matrix of glue (17).

6. The method according to claim 5, **characterized in that** said matrix of glue (17) is produced by the intersection of lines of adhesive.

7. The method according to claim 1, **characterized in that** said assembly (12) is glued to said blank (11) by the application of a breathable hydrophilic polyurethane adhesive that is distributed continuously on the entire surface.

8. A blank (10) waterproofed by means of the method according to one or more of claims 1 to 7, **characterized in that** it comprises a said blank (11) associated with a said assembly (12) that comprises said waterproof and breathable functional element (13) in the form of a flexible sheet and at least two of said meshes (14) between which said functional element (13) is closed in a sandwich-like manner, at least one of said meshes (14) being interposed between said functional element (13) and said blank (11).

9. The waterproofed blank according to claim 8, **characterized in that** said functional element (13) is made of polyurethane.

10. The waterproofed blank according to claim 8, **characterized in that** said functional element (13) is made of expanded polytetrafluoroethylene.

11. The waterproofed blank according to claim 8, **characterized in that** said functional element (13) comprises two superimposed layers, said first layer (15) made of expanded polytetrafluoroethylene and said second layer (16) made of hydrophilic polyurethane.

12. The waterproofed blank according to claim 8, **characterized in that** it has a water penetration resistance at least equal to 15,000 bending cycles, determined according to the method described in the ASTM D 2099-05 standard.

13. A shoe, **characterized in that** it is manufactured with a blank (10) waterproofed by means of the method according to one or more of claims 1 to 7.

14. A shoe, **characterized in that** it comprises a waterproofed blank (10) according to one or more of claims 8 to 12.

15. An item of clothing, **characterized in that** it is manufactured with a blank (10) that is waterproofed by means of the method according to one or more of claims 1 to 7.

16. An item of clothing, **characterized in that** it comprises a waterproofed blank (10) according to one or more of claims 8 to 12.

## Patentansprüche

1. Ein Verfahren zur Abdichtung von Zuschnitten (11) von Schuhen, Handschuhen, Bekleidungsartikeln und anderen Bekleidungsteilen gegen Wasser, das Folgendes umfasst: das Kleben und Pressen einer wasserdichten und atmungsaktiven Anordnung (12), auf die Oberfläche des Zuschnitts (11), auf die Seite die dazu bestimmt ist, nach ihrem Auftragen verborgen zu bleiben, **dadurch gekennzeichnet, dass** die Anordnung (12) hergestellt wird durch Verbinden eines wasserdichten und atmungsaktiven Funktionselements (13) in Form einer flexiblen Schicht, mit mindestens zwei Geweben (14), die es sandwichartig umschließen, wobei mindestens der Gewebe (14) zwischen dem Funktionselement (13) und dem Zuschnitt (11) angeordnet ist.

2. Das Verfahren gemäß Anspruch 1, **dadurch gekennzeichnet, dass** das Funktionselement (13) aus einem Polymermaterial besteht, das undurchlässig für Wasser im flüssigen Zustand und durchlässig für Wasserdampf ist.

3. Das Verfahren gemäß Anspruch 2, **dadurch gekennzeichnet, dass** es einen Schritt des Herstellens des Funktionselements (13) durch Verbinden einer ersten Schicht (15) aus expandiertem Polytetrafluorethylen mit einer zweiten Schicht (16) aus hydrophilem Polyurethan umfasst, wobei erstere bei der Kopplung der Anordnung (12), mit dem Zuschnitt (11), dem Zuschnitt (11) zugewandt ist, mit Anordnung mindestens eines der Gewebe (14) dazwischen.

4. Das Verfahren gemäß Anspruch 1, **dadurch gekennzeichnet, dass** das Verbinden des Funktionselements (13) mit den mindestens zwei Geweben (14) durch Laminierung erreicht wird.

5. Das Verfahren gemäß Anspruch 1, **dadurch gekennzeichnet, dass** die Anordnung (12) mit dem Zuschnitt (11) durch das Auftragen einer Klebematrix (17) verklebt wird.

6. Das Verfahren gemäß Anspruch 5, **dadurch gekennzeichnet, dass** die Klebematrix (17) durch das Schneiden der Klebstofflinien hergestellt wird.

7. Das Verfahren gemäß Anspruch 1, **dadurch gekennzeichnet, dass** die Anordnung (12) mit dem Zuschnitt (11) durch das Auftragen eines atmungsaktiven hydrophilen Polyurethanklebstoffs verklebt wird, der durchgängig auf der gesamten Oberfläche verteilt wird.

8. Ein Zuschnitt (10) der mit dem Verfahren gemäß einem oder mehreren der Ansprüche 1-7 gegen Wasser abgedichtet wird, **dadurch gekennzeichnet, dass** er den Zuschnitt (11) der mit der Anordnung (12) verbunden ist, welche das wasserdichte und atmungsaktive Funktionselement (13) in Form einer flexiblen Schicht und mindestens zweier der Gewebe (14) zwischen denen das Funktionselement (13) sandwichartig eingeschlossen ist umfasst, wobei mindestens eines der Gewebe (14) zwischen dem Funktionselement (13) und dem Zuschnitt (11) angeordnet ist.

9. Der gegen Wasser abgedichtete Zuschnitt, gemäß Anspruch 8, **dadurch gekennzeichnet, dass** das Funktionselement (13) aus Polyurethan besteht.

10. Der gegen Wasser abgedichtete Zuschnitt, gemäß Anspruch 8, **dadurch gekennzeichnet, dass** das Funktionselement (13) aus expandiertem Polytetrafluorethylen besteht.

11. Der gegen Wasser abgedichtete Zuschnitt, gemäß Anspruch 8, **dadurch gekennzeichnet, dass** das Funktionselement (13) zwei übereinander gelegte Schichten umfasst, wobei die erste Schicht (15) aus expandiertem Polytetrafluorethylen besteht und die zweite Schicht (16) aus hydrophilen Polyurethan besteht.

12. Der gegen Wasser abgedichtete Zuschnitt gemäß Anspruch 8, **dadurch gekennzeichnet, dass** er einen Wassereindringwiderstand mindestens gleich 15000 Biegezyklen hat, bestimmt nach dem Verfahren, dass im ASTM D 2099-05-Standard beschrieben ist.

13. Ein Schuh, **dadurch gekennzeichnet, dass** er mit einem Zuschnitt (10) hergestellt ist, der mit dem Verfahren gemäß einem oder mehreren der Ansprüche 1-7 gegen Wasser abgedichtet ist.

14. Ein Schuh, **dadurch gekennzeichnet, dass** er einen gegen Wasser abgedichteten Zuschnitt (10) gemäß einem oder mehreren der Ansprüche 8-12 umfasst.

15. Ein Bekleidungsartikel, **dadurch gekennzeichnet, dass** er mit einem Zuschnitt (10) hergestellt ist, der mit dem Verfahren gemäß einem oder mehreren der Ansprüche 1-7 gegen Wasser abgedichtet ist.

16. Ein Bekleidungsartikel, **dadurch gekennzeichnet, dass** er einen gegen Wasser abgedichteten Zuschnitt (10) gemäß einem oder mehreren der Ansprüche 8-12 umfasst.

## Revendications

1. Procédé d'imperméabilisation à l'eau d'ébauches (11) de chaussures, de gants, de vêtements et d'autres accessoires vestimentaires, comprenant le collage et le pressage sur la surface de ladite ébauche (11), sur le côté censé rester dissimulé après son application, d'un ensemble imperméable à l'eau et respirant (12), **caractérisé en ce que** ledit ensemble (12) est fourni en associant un élément fonctionnel imperméable à l'eau et respirant (13) sous la forme d'une feuille souple pourvue d'au moins deux mailles (14) entre lesquelles il est pris en sandwich, au moins l'une desdites mailles (14) étant interposée entre ledit élément fonctionnel (13) et ladite ébauche (11).

2. Procédé selon la revendication 1, **caractérisé en ce que** ledit élément fonctionnel (13) est constitué d'un matériau polymère qui est imperméable à l'eau à l'état liquide et perméable à la vapeur d'eau.

3. Procédé selon la revendication 2, **caractérisé en ce qu'**il comprend une étape de fourniture dudit élément fonctionnel (13) par association d'une première couche (15) constituée de polytétrafluoroéthylène expansé à une seconde couche (16) constituée de polyuréthane hydrophile, la première faisant face à ladite ébauche (11) dans le couplage dudit ensemble (12) avec ladite ébauche (11), avec l'interposition d'au moins une desdites mailles (14).

4. Procédé selon la revendication 1, **caractérisé en ce que** ladite association dudit élément fonctionnel (13) avec lesdites au moins deux mailles (14) est obtenue par stratification.

5. Procédé selon la revendication 1, **caractérisé en ce que** ledit ensemble (12) est collé à ladite ébauche (11) au moyen de l'application d'une matrice de colle (17).

6. Procédé selon la revendication 5, **caractérisé en ce que** ladite matrice de colle (17) est produite par l'intersection de lignes d'adhésif.

7. Procédé selon la revendication 1, **caractérisé en ce que** ledit ensemble (12) est collé à ladite ébauche (11) par l'application d'un adhésif polyuréthane hydrophile respirant qui est réparti de manière continue sur la totalité de la surface.

8. Ebauche (10) imperméabilisée au moyen du procédé selon une ou plusieurs des revendications 1 à 7, **caractérisée en ce qu'**elle comprend une dite ébauche (11) associée à un dit ensemble (12) qui comprend ledit élément fonctionnel imperméable à l'eau et respirant (13) sous la forme d'une feuille souple et d'au moins deux desdites mailles (14) entre lesquelles ledit élément fonctionnel (13) est pris en sandwich, au moins l'une desdites mailles (14) étant interposée entre ledit élément fonctionnel (13) et ladite ébauche (11).

9. Ebauche imperméabilisée selon la revendication 8, **caractérisée en ce que** ledit élément fonctionnel (13) est constitué de polyuréthane.

10. Ebauche imperméabilisée selon la revendication 8, **caractérisée en ce que** ledit élément fonctionnel (13) est constitué de polytétrafluoroéthylène expansé.

11. Ebauche imperméabilisée selon la revendication 8, **caractérisée en ce que** ledit élément fonctionnel (13) comprend deux couches superposées, ladite première couche (15) constituée de polytétrafluoroéthylène expansé et ladite seconde couche (16) constituée de polyuréthane hydrophile.

12. Ebauche imperméabilisée selon la revendication 8, **caractérisée en ce qu'**elle a une résistance à la pénétration d'eau au moins égale à 15 000 cycles de cintrage, déterminée selon le procédé décrit dans la norme ASTM D 2099-05.

13. Chaussure, **caractérisée en ce qu'**elle est fabriquée avec une ébauche (10) imperméabilisée au moyen du procédé selon une ou plusieurs des revendications 1 à 7.

14. Chaussure, **caractérisée en ce qu'**elle comprend une ébauche imperméabilisée (10) selon une ou plusieurs des revendications 8 à 12.

15. Vêtement, **caractérisé en ce qu'**il est fabriqué avec une ébauche (10) qui est imperméabilisée au moyen du procédé selon une ou plusieurs des revendications 1 à 7.

16. Vêtement, **caractérisé en ce qu'**il comprend une ébauche imperméabilisée (10) selon une ou plusieurs des revendications 8 à 12.
